Europäisches Patentamt

European Patent Office

Office européen des brevets

(19)

(11) Publication number: **0 108 651**
A2

(12) # EUROPEAN PATENT APPLICATION

(21) Application number: **83306851.3**

(22) Date of filing: **09.11.83**

(51) Int. Cl.³: **G 11 C 9/06**

(30) Priority: **09.11.82 US 440334**

(43) Date of publication of application:
**16.05.84 Bulletin 84/20**

(84) Designated Contracting States:
**DE FR GB IT**

(71) Applicant: **STORAGE TECHNOLOGY CORPORATION**
**2270 South 88th Street P.O. Box 98**
**Louisville Colorado 80027(US)**

(72) Inventor: **Brown, Paul**
**450 Oakwood Place**
**Boulder Colorado 80302(US)**

(72) Inventor: **Whitney, Bradley**
**308 Biscayne Ct**
**Lafayette Colorado 80026(US)**

(72) Inventor: **Swiatek, Paul**
**1240 Scorpios Circle**
**Lafayette Colorado 80026(US)**

(74) Representative: **Jackson, David Spence et al,**
**REDDIE & GROSE 16, Theobalds Road**
**London, WC1X 8PL(GB)**

(54) Dynamic addressing for variable track length cache memory.

(57) A data storage system includes a host computer (10) and magnetic disk units (26) of diverse types. A solid state cache memory (30) stores data records at addresses which are generated by a microprocessor (40) in the cache manager (32). These addresses include a beginning of track address and an end of track address which span a frame having enough memory locations to store an entire track for a particular type of disk unit (26).

EP 0 108 651 A2

./...

FIG. 1

## DYNAMIC ADDRESSING FOR VARIABLE TRACK LENGTH CACHE MEMORY

### Field of the Invention

This invention relates to data storage systems, and more particularly, to a high speed cache memory in which the addressing is such that the array is treated as continuous storage space.

### Background of the Invention

Data storage systems have been improved by reducing the time required to execute a given command, or by reducing the cost of storage space. There is typically a trade-off between cost of memory and access time. Magnetic disk units have a lower cost per memory location than solid state memory, but also have a slower access time. European Patent application no. 82306312.8, publication no. 0080875, describes a solid state cache memory for a data storage system which is connected to disk or long term memory storage directors, so that data can be written to and read from the cache memory. The records which are stored in cache memory can be read from it in response to output commands in much the same manner that the data records are read from disk units, but with much faster access time. Furthermore, by anticipating what records the host computer will require in the future, data records are filed in cache memory on a selective basis, as more fully described in European patent application no. 82306313.6, publication no. 0080876.

Some of the delay in memory access in magnetic disk drives is caused by mechanical limitations. For example, in a disk drive, disks rotate at a fixed speed past the read/write heads. There is generally an index mark on the disk track before the header and the first data record, but subsequent records do not generally have such index marks. When data records are read into the cache memory, it is desirable to start with the record which is presently under the magnetic read/write heads without waiting for the disk to rotate until the index mark comes under the read/write heads, and then reading in records sequentially starting with the first record. In the data storage system on which the present invention is an improvement, records are read into cache memory starting with a random record which may be anywhere in a track. Then, subsequent records in that track are stored, and after that, records between the index mark and the random record are stored. This decreases access time as is more fully described in European patent application no. 82306315.1, publication no. 0080378.

A further improvement in such a data storage system is described in European patent application no. 82306314.4, publication no. 0080877. In accordance with the invention of that application, the solid state cache memory is divided into domains and the domains are further divided into frames, each of which stores a complete track for a magnetic disk drive of a particular type. That is, each domain accommodates records from a disk drive of a particular type. The different domains are used to store, for example 20 kilobyte tracks, 37 kilobyte tracks, and 47 kilobyte tracks. Each of these track sizes is unique to a particular type of magnetic disk drive.

In the data storage system of the type described in the aforementioned applications, it is desirable to store a record in cache in the fastest and most efficient manner.

Accordingly, it is an object of the present invention to provide a cache memory for a data storage system in which the memory array is addressed as continuous storage space. In the prior art where random access storage is used to emulate a direct access storage device such as a disk unit, addressing was restricted to physical boundaries and storage therefore appeared as many fixed address spaces.

Related Applications

The present invention is an improvement on the data storage system including cache memory which is described in the aforementioned applications which are incorporated herein by reference.

Summary of the Invention

In accordance with the present invention, the data records from a track in a magnetic disk are stored in a frame in a cache memory which is described by two parameters, the beginning of track (BOT) address and an end of track (EOT) address. The addresses for BOT and EOT are stored in a register file where they are easily changed. BOT and EOT addresses can be varied at any time under program control. With these programmable frame boundaries, the addressing of frames in the cache becomes dynamically variable.

In carrying out the invention, a microprocessor in the cache manager stores a list of addresses for frames in the cache memory at which tracks of data from different types of magnetic disk units may be stored. These addresses include a beginning of track address from which an end of track address can be derived. These span a frame having enough memory locations to store an entire track for a particular type of disk unit. These addresses, are supplied to a data and address assembler. Records from a track of one of the disk units are stored in the frame specified by the beginning of track address and the end of track address. The records are stored in the order received. That is, records are stored sequentially, but the first record is not necessarily stored immediately after the EOT address. Upon reading these records, it is desired to read them out sequentially starting with the record at a specified starting address. In order to do this, each time a record is read, the starting address is incremented. The incremented address is compared to the end of track address. When the end of track address is reached, the incremented address is set to the beginning of track address. In this manner, records are read from the cache memory in a manner which emulates the reading of records from the track of the disk unit.

The foregoing and other objects, features and advantages of the invention will be better understood from the following more detailed description and appended claims.

Short Description of the Drawings

Fig 1 shows a data storage system in which the present invention is incorporated;

Fig 2 shows the portion of the data and address assembler which carries out the invention;

Fig 2a depicts the manner in which the BOT, EOT and starting address are generated in the cache manager;

Figs 3a-3c depict the manner in which frames are stored in domains in the cache memory of the present invention;

Fig 4 depicts the records from one track of a magnetic disk;

Fig 5 depicts the records from a track of a magnetic disk as they are read from disk starting at the index mark;

Fig 6 depicts an example of the manner in which the records may be read into the cache memory; and

Figs 7a-7c show the LRU list in the cache manager in more detail.

Description of the Preferred Embodiment

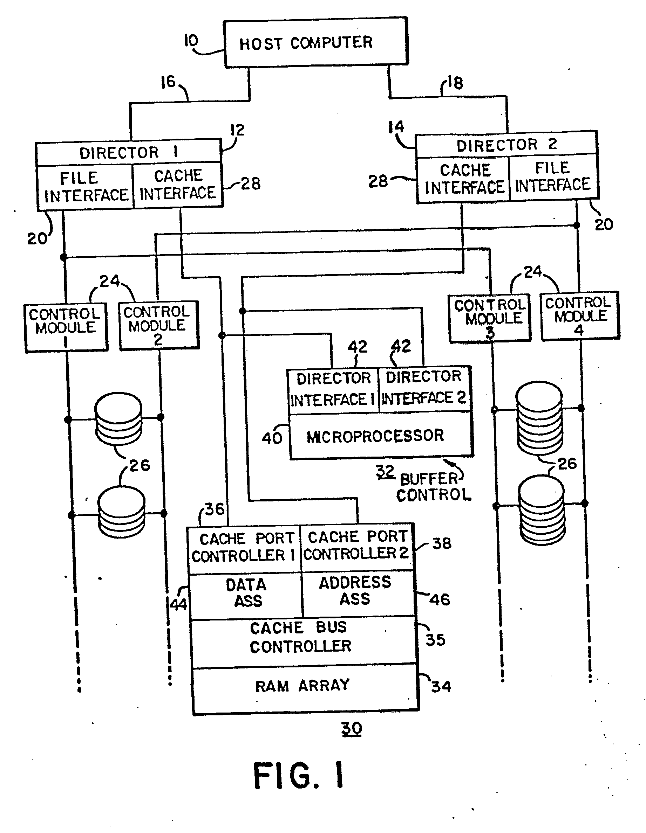

Referring to Fig 1, the host computer 10 is connected to a pair of storage directors 12 and 14 through channels 16 and 18, respectively. Each director includes a file interface 20 through which data is passed, via control modules indicated at 24, and thence to disk drive units indicated at 26. As indicated schematically in the drawing, the disk drives 26 may be of various types. The control modules 24 to which the disk drives 26 are connected interface varying types of disk drives with directors 12 and 14 such that plural types of disk drives 26 together with appropriate control modules 24 can be used in conjunction with identical directors. The directors 12 and 14 are modified to additionally comprise cache interface units 28 which serve to interface the directors with a cache memory subsystem according to the invention, which as schematically shown comprises a cache memory system 30 and a cache manager 32. The cache memory system 30 has as its chief function the storage of data having been "staged" in anticipation of being required by the host computer. When the staged data is called for it can be very quickly read out of a solid-state random access memory (RAM) array 34, through one of a plurality of cache port controllers 36 and 38, respectively communicating with the directors 12 and 14, and thence to the host. This is generally a considerably faster process than reading the data directly from a disk drive unit 26 as there is no seek and latency time involved in the use of the random access memory 34, as there is in the case of the disk memories 26.

As described thus far, the system of Fig 1 is of the type shown in the aforementioned applications. According to the present invention, the cache manager 32 includes a microprocessor 40 which stores a list of addresses for the memory array 34 at which tracks of data on the magnetic units 26 may be stored. These addresses include a beginning of track address and an end of track address which span a frame having enough memory locations to store an entire track for a particular type of disk unit.

When a track of data records is to be stored in the RAM memory array 34, the microprocessor 40 determines an available frame in the RAM array 34 and transfers the BOT, EOT and starting address for that frame through the director interface 42, the cache interface 28, and the cache port controller 36 to the data assembler 44 and the address assembler 46, one of which is provided for each of the directors 12 and 14. Data assembler 44 receives 8 bits at a time and converts them to words of 64 data bits plus 8 bits of parity. Address assembler 46 receives 8 bits at a time from the director and converts them into 24-bit addresses.

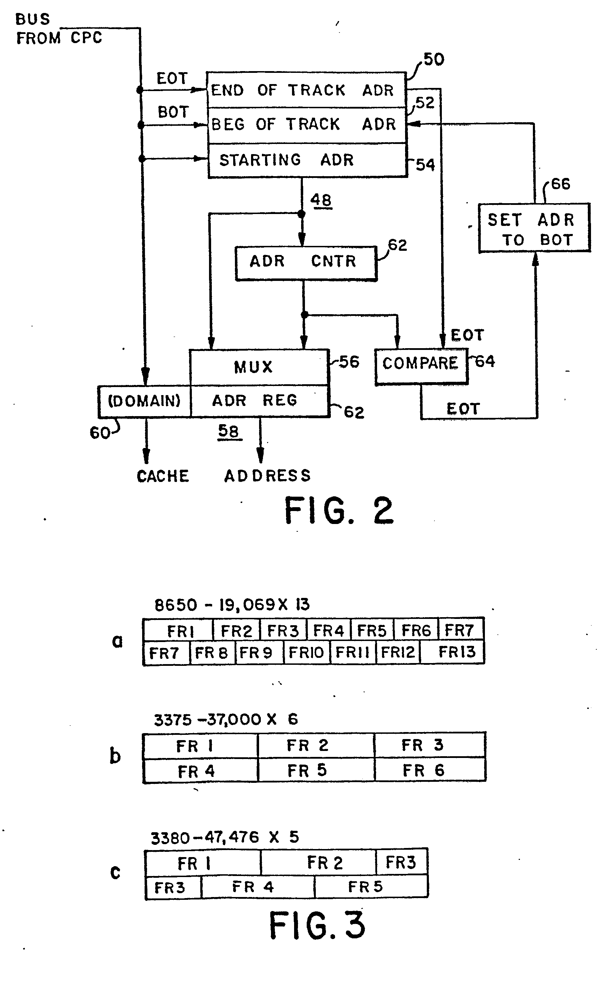

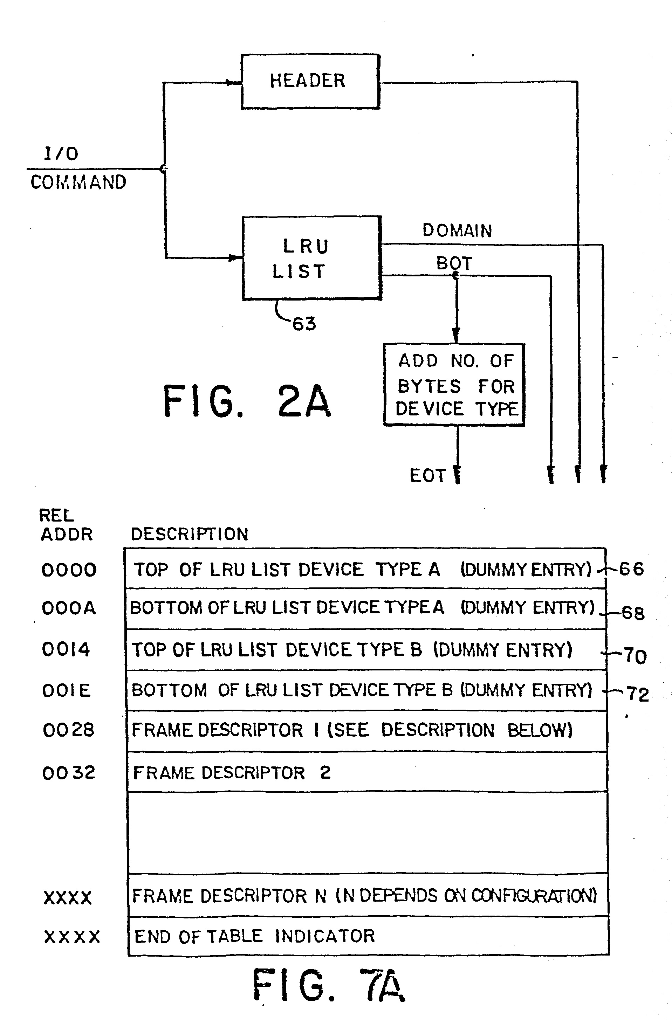

Fig 2 shows the register file 48 in the address assembler 44. Register file 48 receives the EOT, BOT and starting addresses from the director. It has a section 50 for storing the EOT address, a section 52 for storing the beginning of track address, and a section 54 for storing the starting address.

Address register 58 controls the reading to and writing from the cache memory. It has a section 60 which specifies the domain and a section 62 which specifies the address for each record to be stored or read. Initially, the starting address is transferred through multiplexer 56 into address register 58. Each time a record is stored, or read, address counter 68 is incremented by one address. The incremented address is transferred to address register 62. It is also compared to the EOT address in comparator 64. When a comparison is detected, the beginning of track address in file section 52 is transferred into the starting address section 54, this step being indicated at 66 in Fig 2. In this manner, during the read of the record, when the last record of a frame is read, the addressing is immediately switched to the beginning of the frame so that the next sequential record is read in a manner which emulates the reading of this track of records from a magnetic disk.

Fig 2A depicts the manner in which the BOT, EOT, starting address and domain address are generated in the cache manager 32. The cache manager contains a linked list of frame descriptors which specify the address and the status of each of a plurality of frames in the cache array 34. When writing to cache, in response to an input/output command, the domain address and the beginning of track of an available frame are obtained from the linked list 63. This is referred to as an "LRU" list (least recently used) because the top of the list contains frames which have been most recently used and the bottom of the list contains frames which have not been used and which are available. The LRU list provides a BOT address of a frame which is reserved for a particular type of magnetic disk deivce. The number of bytes in a track of data for this type of device is known, and it is added to the BOT address to obtain the EOT address. In this manner, the EOT address is derived by the microprocessor.

In writing a track to cache, the starting address is the first address after the BOT address which allows an adequate number of storage locations for the header. As a track is staged, or written, to the cache, the address location of each record is stored in the header.

When reading from the cache, the starting address is the address of the record specified, as determined from the header.

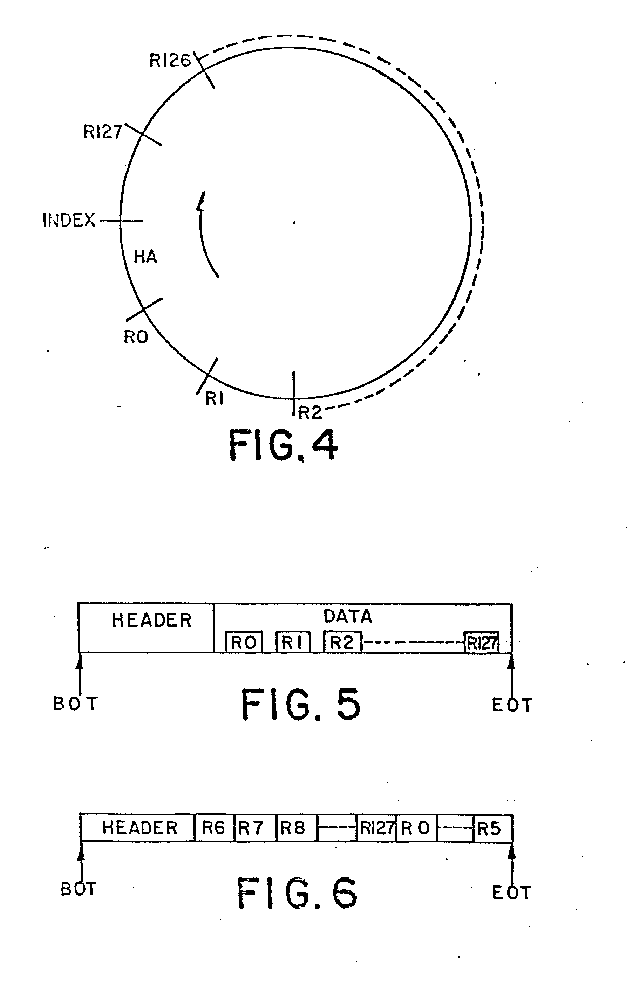

The operation of the invention will be better understood with reference to Figs 3-6. Fig 3 shows the manner in which the cache memory array is divided into domains and frames. Three domains are shown in Figs 3a-3c, one for each of three different types of magnetic disk units. In this example, the domains are approximately 256 kilobytes (kb) long. In an exemplary embodiment of the invention, the cache memory contains sixteen such domains for a total capacity of approximately 4 megabytes.
Fig 3a shows the domain divided into thirteen frames, each of
which contains approximately 19,069 bytes of data plus header
information. Thirteen tracks of this length will fit into the
256 kb domain of Fig 3a. Fig 3b depicts the domain divided
into six 37,000 kb frames which, with headers will fit into the
256 kb domain. Finally, Fig 3c shows the division of a domain
into five frames, each of which accommodates a 47,476 kb track
size. As more fully explained in European patent application
no. 82306314.4, publication no. 008087, the division of storage
space into domains in this manner most efficiently stores data
from different types of magnetic disk units. In this example,
disk drives having 19,069 bytes, 37,00 byte track size and a
47,476 byte track size. In order to store a track of data from
disk into the cache memory, the address of the domain, the BOT,
EOT and starting addresses for an available frame in that
domain, are required.

Fig 4 shows a typical arrangement of data records on a
magnetic disk track. In this case, the first record after the
index is the header, HA, followed by, typically, 128 data records
designated RO, R1, R2, ...., R127. The records are continuously
read in the sequence indicated in Fig 5 with the index being
read after R127. After the index, the header is read, then
the data records are read in the sequence in which they appear
on the track, RO, R1, R2, .....

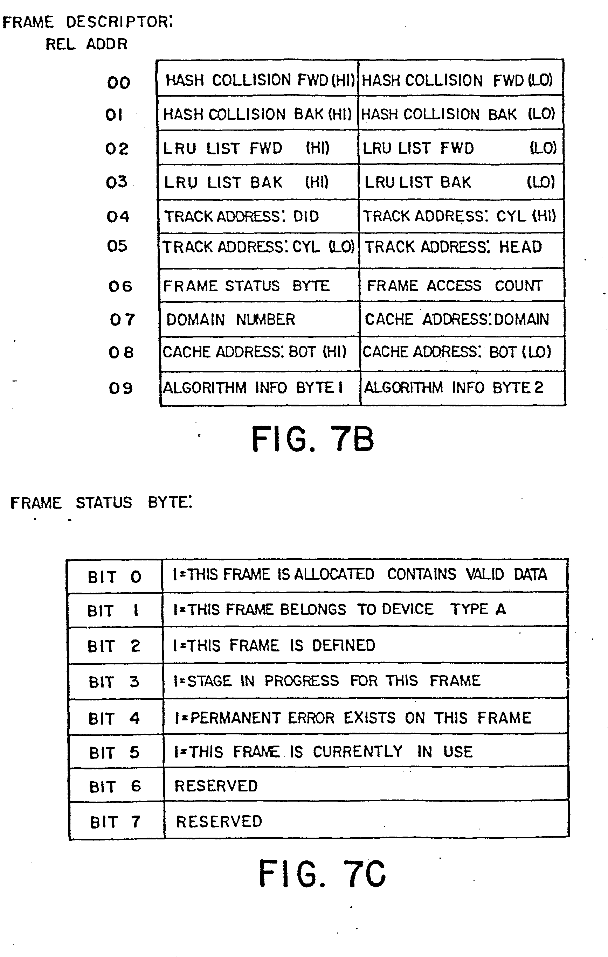

Assume by way of example that the central processor issues
a command which requires the reading of data record R5. Data
record R5 is read and transferred to the storage director 12 in
accordance with standard magnetic disk unit procedure. In the
system to which the present invention relates, a determination
is made as to whether R5 is in a sequence of records which can
be usefully transferred to cache memory. One of the criteria
used in making this determination is whether the record R5 is
part of a sequential data set. If it is, the director determines
the BOT and EOT of an available frame. These are transferred
to the file register 48 (Fig 2) for use in storing the track of data in that frame. The data records are stored in cache memory in the order depicted in Fig 6. Space is reserved after the BOT address for the header. The first data record to be stored is record R6 because this record is underneath the magnetic heads first after the determination has been made to stage these track records to cache. Therefore, the records are stored in the sequence R6, R7, R8 ... R127, R0, ....R5, filling out the complete frame. The header, containing the address of each of the data records is also stored in cache memory.

In order to read the records shown in Fig 6, the storage director transfers to assembler 46 (Fig 1), the BOT, EOT and starting address of the record to be read. The data records are read out of cache memory, starting with the record at the starting address. Each time a record is read, the starting address is incremented in the address register 68 (Fig 2). After record R5 is read, the incremented address matches the EOT. In response to this comparison, the incremented address is set to the BOT address. Thus, the header is read, and the reading of data records continues with the reading of records R6, R7, R8 and so on. In this manner, the records are read out of the cache memory in the same manner that they are read from a rotating magnetic disk track. The reading is sequential and continuous.

Figs 7a-7c depict the cache directory which is stored in the microprocessor 40 in cache manager 32. This directory contains the linked list (LRU) which is used to determine the BOT addresses. The cache directory domain contains a linked list of frame locations and the status of each. Fig 7A shows a series of frame descriptors, each describing a frame in the array. Each frame descriptor contains the status of its corresponding frame together with LRU (least recently used) pointers which maintain the linked lists. The frame descriptor 66 is at the top of the list which accesses frames which have been most recently used; the descriptor 68 is at the bottom of the list which accesses frames which have not been used recently and those which are free. Descriptors 66 and 68 are for one type of disk drive (type A) and descriptors 70 and 72 are for another type of disk drive (type B).

Fig 7b shows the ten 2-byte words which make up each of the frame descriptors. The first two words (addresses OO and O1) are used in searching for a particular track of data which has been stored in cache. The words stored at address locations O2 and O3 are the pointers. The pointer word at address O2 gives the address of the frame which is the next most active. The list has double pointers so that the pointer at address O3 specifies the neighbor frame toward the top of the list. The words at addresses O4 and O5 are the track addresses stored in the descriptor. The frame status byte is stored at address O6 and is described more fully with respect to Fig 7c. The word stored at address O7 is the domain number for the frame. The words stored at address O8 are the BOT address for that particular frame.

Fig 7c shows in more detail the seven bits of the frame status byte of Fig 7b. These bits are set to indicate the staging activity of the particular frame under consideration.

While a particular embodiment of the invention has been shown and described, various modifications are within the true spirit and scope of the invention. The appended claims are, therefore, intended to cover all such modifications.

- 10 -

CLAIMS

1. In a data storage system comprising:

a host computer which generates input/output commands for a channel;

a plurality of magnetic disk units of diverse types which respond to said input/output commands for long term storage of data records;

a director for controlling flow of data between said channel and said magnetic disk units in response to input/output commands; and

a solid state cache memory for storing data records for response to anticipated input/output commands, the improvement comprising:

means for generating addresses for said cache memory at which tracks of data from said magnetic disk units may be stored, said addresses including a beginning of track address and an end of track address which span a frame having enough memory locations to store an entire track for a particular type of disk unit.

2. The improvement in a data storage system recited in claim 1 and an address assembler for said cache memory for reading data records from frames in said cache memory comprising:

means for reading a record specified by a starting address;

means for sequentially incrementing said starting address, said means for reading being responsive to the incremented address;

comparison means for comparing the incremented address to said end of track address; and

means for changing the incremented address to said beginning of track address in response to detection of comparison, whereby said records are read from said cache memory in a manner which emulates the reading of records from a track of said disk unit.

3.    The improvement in a data storage system recited in claim 2 wherein said address assembler further comprising:

a register file having a section for storing said end of track address, a section for storing said beginning of track address, and a section for storing said starting address; and

means responsive to said comparison means for transferring the beginning of track address to the section containing said starting address upon detection of comparison.

4.    The improvement in a data storage system recited in claim 2 wherein said address assembler includes an address register, the address of the next memory location to be read from or written to, being stored in said address register.

5.    The improvement in a data storage system recited in claim 1 wherein said means for generating addresses includes a microprocessor in a cache manager which controls the flow of data records to and from said cache memory.

6.    The improvement in a data storage system recited in claim 5 wherein said microprocessor has a list of frame descriptors which include starting addresses for frames assigned to a particular type of disk unit.

7.    The improvement in a data storage system recited in claim 6 wherein said microprocessor has means for deriving said end of track address from said beginning of track address and from the number of bytes per track for that type of disk unit.

8.    A data storage system comprising:

a host computer which communications input/output commands via a channel;

a plurality of magnetic disk units which respond to said input/output commands;

solid state cache memory means having a plurality of continuous storage locations specified by addresses; and

means for generating beginning of track and end of track addresses for said cache memory at which tracks of data from said magnetic disk units may be stored, each beginning of track and end of track address spanning a frame in said cache memory having enough memory locations to store an entire track for a particular type of magnetic disk unit.

9.  The method of operating a data storage system including a host computer which communicates by a channel with magnetic disk storage units and a high speed cache memory comprising:

storing a list of descriptors of frames in said cache memory at which tracks of data from said magnetic disk unit may be stored, said descriptors including a beginning of track address for each frame;

deriving an end of track address which spans a frame having enough memory locations to store an entire track for a particular type of disk unit; and

storing a plurality of data records from a track of one of said disk units in one of said frames specified by said beginning of track and end of track addresses.

10.  The method recited in claim 9 further comprising:

reading said records from cache memory by:

reading a record specified by a starting address in said frame;

sequentially incrementing the starting address and reading the record specified by the incremented address;

comparing the incremented address to said end of track address; and

in response to detection of comparison, changing the incremented address to said beginning track address whereby said records are read from said cache memory in a manner which emulates the reading of records from a track of said disk unit.

FIG. I

FIG. 2

FIG. 3

```
                    ┌──────────────┐
              ┌────▶│   HEADER     │──────────────────────┐
              │     └──────────────┘                      │
   I/O        │                                           │
   ─────────  ┤                                           │
   COMMAND    │                                           │
              │     ┌──────────────┐   DOMAIN             │
              └────▶│    L R U     │─────────────────┐    │
                    │    LIST      │      BOT         │    │
                    └──────────────┘       ●──────┐  │    │
                         └─63                      ▼  │    │
                                          ┌──────────────┐
                                          │ ADD NO. OF   │
              FIG. 2A                      │ BYTES FOR    │
                                          │ DEVICE TYPE  │
                                          └──────────────┘
                                                 │
                                       EOT ▼      ▼  ▼  ▼
```

FIG. 2A

| REL ADDR | DESCRIPTION |
|---|---|
| | DESCRIPTION |
| 0000 | TOP OF LRU LIST DEVICE TYPE A (DUMMY ENTRY) ~66 |
| 000A | BOTTOM OF LRU LIST DEVICE TYPE A (DUMMY ENTRY) ~68 |
| 0014 | TOP OF LRU LIST DEVICE TYPE B (DUMMY ENTRY) ~70 |
| 001E | BOTTOM OF LRU LIST DEVICE TYPE B (DUMMY ENTRY) ~72 |
| 0028 | FRAME DESCRIPTOR I (SEE DESCRIPTION BELOW) |
| 0032 | FRAME DESCRIPTOR 2 |
| | |
| XXXX | FRAME DESCRIPTOR N (N DEPENDS ON CONFIGURATION) |
| XXXX | END OF TABLE INDICATOR |

FIG. 7A

0108651

4/5

FIG.4

BOT    FIG. 5    EOT

BOT    FIG. 6    EOT

5/5

0108651

FRAME DESCRIPTOR:
REL ADDR

| | | |
|---|---|---|
| 00 | HASH COLLISION FWD (HI) | HASH COLLISION FWD (LO) |
| 01 | HASH COLLISION BAK (HI) | HASH COLLISION BAK (LO) |
| 02 | LRU LIST FWD (HI) | LRU LIST FWD (LO) |
| 03 | LRU LIST BAK (HI) | LRU LIST BAK (LO) |
| 04 | TRACK ADDRESS: DID | TRACK ADDRESS: CYL (HI) |
| 05 | TRACK ADDRESS: CYL (LO) | TRACK ADDRESS: HEAD |
| 06 | FRAME STATUS BYTE | FRAME ACCESS COUNT |
| 07 | DOMAIN NUMBER | CACHE ADDRESS: DOMAIN |
| 08 | CACHE ADDRESS: BOT (HI) | CACHE ADDRESS: BOT (LO) |
| 09 | ALGORITHM INFO BYTE 1 | ALGORITHM INFO BYTE 2 |

## FIG. 7B

FRAME STATUS BYTE:

| | |
|---|---|
| BIT 0 | 1=THIS FRAME IS ALLOCATED CONTAINS VALID DATA |
| BIT 1 | 1=THIS FRAME BELONGS TO DEVICE TYPE A |
| BIT 2 | 1=THIS FRAME IS DEFINED |
| BIT 3 | 1=STAGE IN PROGRESS FOR THIS FRAME |
| BIT 4 | 1=PERMANENT ERROR EXISTS ON THIS FRAME |
| BIT 5 | 1=THIS FRAME IS CURRENTLY IN USE |
| BIT 6 | RESERVED |
| BIT 7 | RESERVED |

## FIG. 7C